# EUROPÄISCHE PATENTANMELDUNG

(11) **EP 3 696 754 A1**
(43) Veröffentlichungstag der Anmeldung: **19.08.2020**
(21) Anmeldenummer: 19157040.7
(22) Anmeldetag: 13.02.2019
(51) Int. Cl.: G06Q 10/08, G06Q 50/30

(54) **VERFAHREN UND KOMMUNIKATIONSSYSTEM FÜR DIE VERWALTUNG VON MOBILEN RESSOURCEN IN EINEM EISENBAHNSYSTEM**

(71) Anmelder: Schweizerische Bundesbahnen SBB, 3000 Bern (CH)
(72) Erfinder: SCHULZ, Olaf, 3014 Bern (CH)
(74) Vertreter: Rutz & Partner

(57) **Zusammenfassung**

Das Verfahren dient der Verwaltung von mobilen Ressourcen (1001, L01, ..., L99), insbesondere schienengebundenen Fahrzeugen, eines Eisenbahnsystems, die je mit wenigstens einem Datenträger (5) versehen sind, der lokale Ressourcendaten (d1001) aufweist, die mittels mobilen oder stationären Lesegeräten (KM, KS) drahtlos lesbar sind und die zumindest der zugehörigen mobilen Ressource (1001; L01; ...; L99) individuell zugeordnete Identifikationsdaten (1001) umfassen, die in einem Verwaltungsrechner (VR) registriert sind. Erfindungsgemäss ist vorgesehen
a) dass die Identifikationsdaten (1001) der mittels eines der mobilen Lesegeräte (KM) ausgelesenen lokalen Ressourcendaten (d1001) als Element oder Argument einer Zieladresse (a1001) zum Verwaltungsrechner (VR) übermittelt werden;
b) dass der Verwaltungsrechner (VR) den übermittelten Identifikationsdaten (1001) zugeordnete zentrale Ressourcendaten (f1001) vorzugsweise automatisch an das mobile Lesegerät (KM) retourniert; und
c) dass die zentralen Ressourcendaten (f1001) auf dem mobilen Lesegerät (KM) angezeigt und/oder verarbeitet werden.

## Beschreibung

Die Erfindung betrifft ein Verfahren und ein Kommunikationssystem für die Verwaltung, insbesondere Betriebsdisposition, von mobilen Ressourcen in einem Eisenbahnsystem, insbesondere von Schienenfahrzeugen, einschliesslich Dienstfahrzeugen, die in einem Schienennetz eingesetzt werden.

Für die Planung des Einsatzes von Ressourcen in der Eisenbahntechnik stehen umfangreiche Verwaltungssysteme und Kommunikationssysteme zur Verfügung. Für den optimalen Betrieb der Ressourcen ist wichtig, dass die Planung möglichst exakt eingehalten wird, dass die benötigten Ressourcen am Einsatzort bereit stehen, dass Wartungsarbeiten ausgeführt sind, dass die Ressourcen kompatibel zueinander sind und dass allfällige Konflikte frühzeitig erkannt werden. Wesentlich ist daher, dass zuverlässige Informationen möglichst ohne zeitliche Verzögerung auf jeder Betriebsebene des Eisenbahnsystems zur Verfügung gestellt werden.

Für einfache schienengebundene Nutzfahrzeuge für die in der Regel keine besonderen Informationen erforderlich sind, oder für Zugfahrzeuge, für die Informationen anderweitig zur Verfügung gestellt werden, ist ein wesentlicher Informationsbedarf bereits abgedeckt. Auch bei diesen Schienenfahrzeugen wäre es jedoch wünschenswert, wenn weitere Informationen, insbesondere aktualisierte Informationen, wahlweise und flexibel zur Verfügung gestellt werden könnten. Ein besonders hoher Informationsbedarf besteht bei Dienstfahrzeugen, die für Sonderzwecke, wie Bauarbeiten, eingesetzt werden.

Von zentraler Bedeutung ist die Überwachung der tatsächlichen Positionen oder Aufenthaltsorte der zur Verfügung stehenden Ressourcen. Aus [1], EP2631152B1, ist ein Verfahren für die Verwaltung von in einem Schienennetz verkehrenden Ressourcen, insbesondere Lokomotiven, bekannt. Nach diesem Verfahren erfolgt insbesondere bei einer Änderung der Zuglaufdaten selektierter Ressourcen eine Kontaktaufnahme über das zellulare Mobilfunknetz mit Mobilendgeräten der selektierten Ressourcen. Anschliessend werden im Mobilfunknetz die Funkzellen oder Gruppen von Funkzellen ermittelt, denen die selektierten Ressourcen zugeordnet sind, und abschliessend wird die Position der selektierten Ressourcen durch Zuordnung der ermittelten Funkzellen zu einem Betriebspunkt des Schienennetzes ermittelt und einer Verwaltungseinheit gemeldet.

Die Nutzung der ermittelten Ortsdaten erfolgt auf übergeordneten Betriebsebenen, z.B. für Planungs- und Kontrollzwecke. Für untergeordnete Betriebsebenen, insbesondere für die Anwenderebene, die Bedienerebene und die Wartungsebene, resultiert bei Ausführung dieses Verfahrens kein unmittelbarer Nutzen. Informationen für den Einsatz und die Wartung der Ressourcen werden typischerweise über andere Kanäle ermittelt. Der Lokomotivführer z.B. ist für die Bedienung der Lokomotive geschult und wird in Abhängigkeit des Fahrmodus durch anderweitige Systeme, insbesondere die Leittechnik und Sicherungstechnik unterstützt. Fahrmodus 1 betrifft normale Zugfahrten mit Sicherung durch die Leitstelle von Betriebspunkt zu Betriebspunkt. Fahrmodus 2 betrifft Rangierfahrten, die gesichert durch eine Leitstelle oder auch auf Sicht erfolgen können. Fahrmodus 3 betrifft Fahrten im gesperrten Gleis mit Dienstfahrzeugen auf Sicht und ohne Sicherung durch die Leitstelle. Fahrmodus 2 und Fahrmodus 3 stellen besondere Anforderungen an die Betriebsdisposition, da diese in der Regel ohne Überwachung durch die Leittechnik verkehren.

Zu beachten ist, dass anhand der GSM Technik ermittelte Daten möglicherweise nicht die geforderte geographische Präzision liefern oder genügend präzise Daten erst nach längerem Fahrbetrieb und gleichzeitiger Überwachung aller Funkzellen ermittelt werden können. Insbesondere können relevante Informationen für Ressourcen, die nur innerhalb einer Funkzelle bewegt werden oder die getrennt auf unterschiedlichen Fahrwegen, aber zeitgleich innerhalb derselben Funkzellen bewegt werden, möglicherweise nicht ermittelt werden.

In [2], Leitfaden zur Anwendung des zentralisierten Europäischen Virtuellen Einstellungsregisters (ECVVR)/Referat Interoperabilität der Europäischen Eisenbahnagentur (European Railway Agency) (ERA/GUI/01-2010/INT Version: 4.00), Ziff. 3.12 ist festgelegt, dass alle Schienenfahrzeuge registriert und gekennzeichnet werden müssen. Das bedeutet, dass eine Maschine beliebiger Art, die im Betrieb auf Schienenwegen verkehrt, nach der Begriffsbestimmung der Interoperabilitätsrichtlinie als "Fahrzeug" einzustufen, in der Regel im nationalen Einstellungsregister (NVR) zu registrieren und mit einer Europäischen Fahrzeugnummer (EVN) zu kennzeichnen ist. Zweck des Registers ist es, europaweit Informationen über Schienenfahrzeuge bereitzustellen, deren Inbetriebnahme genehmigt wurde. Das NVR enthält u.a. Angaben zur Inbetriebnahme, zum jeweiligen Halter und Eigentümer. Die Europäische Eisenbahnagentur (ERA) betreibt ein IT-System, welches entsprechende Anfragen an die jeweiligen nationalen Fahrzeugeinstellungsregister (NVR) weiterleitet. Für die Einsatzplanung der Ressourcen bzw. schienengebundenen Maschinen enthält das NVR nur Informationen, falls diese für den Einsatz im Fahrmodus 1 oder 2 vorgesehen sind. Den Kennzeichnungen der Maschinen gemäss den Vorschriften der Europäischen Eisenbahnagentur oder dem damit verbundenen Eintrag im nationalen Einstellungsregister (NVR), das über separate Kanäle zugänglich ist, sind daher nur beschränkt Informationen zu entnehmen, die auf der Anwendungsebene genutzt werden könnten.

Informationen zu schienengebundenen Fahrzeugen liefert auch das Zugbeeinflussungssystem, welches auf der RFID-Technologie basierende Eurobalisen umfasst, die stationär entlang den Schienen angeordnet sind. Bei der Überfahrt über Balisen, die zur unidirektionalen Datenübertragung vorgesehen sind, werden Daten zur Lokomotive übertragen, wodurch deren Position festgestellt werden kann. Ein Zugbeeinflussungssystem auf der Basis von ERTMS (European Rail Traffic Management System) und ETCS (European Train Control System) Level 2 mit einem Radio Block Center (RBC) ist z.B. in [3], EP1897781A2, beschrieben. Die auf diese Weise ermittelten Informationen beschränken sich im Wesentlichen wiederum auf Identifikationsdaten und zugehörige Positionsdaten. Zu beachten ist, dass Positionsdaten typischerweise nur im Betriebsmodus 1 bei Überfahrt einer Balise ermittelt werden können. Zu beachten ist zusätzlich, dass Balisen normalerweise grosse gegenseitige Abstände aufweisen.

Bekannt sind Balisen, die eine bidirektionale Datenübertragung (https://de.wikipedia.org/wiki/European Train Control System) erlauben. Daten können somit nicht nur von der Balise zum Schienenfahrzeug, sondern auch vom Schienenfahrzeug zur Balise übertragen werden.

Das Radio Block Center (RBC), das einerseits mit wenigstens einem Stellwerk verbunden und andererseits mittels Funkverbindungen über das Mobilfunknetz GSM-R (Global System for Mobile Communication-Railways) mit Schienenfahrzeugen verbindbar ist, dient der Führung von Schienenfahrzeugen auf einem bestimmten Streckenabschnitt. Das ETCS realisiert die sicheren Funktionen der Zugbeeinflussung. Beispielsweise werden Positionsmeldungen des Schienenfahrzeugs an das Radio Block Center (RBC) und Fahrtberechtigungen an das Schienenfahrzeug gesendet.

Im Schweizer Eisenbahnnetz ist ferner das System AFI (Automatische Fahrzeug Identifikation) implementiert, ein proprietäres RFID-System mit RFID-Lesegeräten, welche meist an Knotenpunkten installiert sind. Der Abstand zwischen RFID-Lesegeräten liegt typischerweise bei etwa 25 km. Aufgrund der grossen Distanzen zwischen den RFID-Lesegeräten überfahren Fahrzeuge im Betriebsmodus 2 oder 3 oder Fahrzeuge im Betriebsmodus 1, die nur über kürzere Distanzen verkehren, diese RFID-Lesegeräte oft nicht und werden daher vom System AFI nicht erfasst. Im Fahrmodus 2 (Rangierfahrten) und im Fahrmodus 3 (Dienstfahrten auf gesperrten Gleisen) werden die betreffenden Schienenfahrzeuge in der Regel nicht erfasst.

Aus [4], EP1672560B1, ist ein auf der RFID-Technologie basierendes Identifikationssystem bekannt, welches stationären und mobilen Lesegeräten erlaubt, Daten drahtlos aus einem Datenträger auszulesen, der mit einem Schienenfahrzeug verbunden ist. Die ausgelesenen Daten umfassen im Wesentlichen in einem Transponder oder in einem darin vorgesehenen Datenträger enthaltene unveränderliche Identifikationsdaten. Die Informationen sind daher wesentlich eingeschränkt und dienen im Wesentlichen Identifikationszwecken. RFID (radio-frequency identification)-Systeme sind z.B. in https://de.wikipedia.org/wiki/RFID oder in [5], Klaus Finkenzeller, RFID-Handbuch, 3. Auflage, Carl Hanser Verlag, München 2002, (siehe z.B. Kapitel 3, Seiten 29 ff.) beschrieben.

Beschränkte Informationen zu Schienenfahrzeugen, welche sich innerhalb eines Streckennetzes von Streckenblock zu Streckenblock fortbewegen, können ferner mittels des Zugsicherungssystems ermittelt werden, welches diese Bewegungen überwacht. Zugsicherungssysteme sind z.B. in [6], EP2090491A1, beschrieben. Vom Zugsicherungssystem, dem von Stellwerken die Einfahrt eines Zuges, der im Fahrmodus 1 betrieben wird, in einen Streckenblock gemeldet wird, können Zuglaufdaten bzw. die Ankunft und die Abfahrt des Zuges an den Betriebspunkten ermittelt werden.

Satellitengestützte Systeme, wie das GPS, liefern relativ präzise Positionierungsinformationen. Die Kopplung dieser Systeme mit den Systemen der Eisenbahntechnik erlaubt es, entsprechend ausgerüstete Zugeinheiten in Bereichen zu lokalisieren, die nicht überdacht sind oder unterirdisch liegen.

In der Eisenbahntechnik werden somit zahlreiche technische Systeme eingesetzt, mittels denen Informationen ermittelt und übertragen werden können, um die Verwaltung und Nutzung von Ressourcen in einem Schienennetz zu ermöglichen. Solche Informationen werden jedoch hauptsächlich für Schienenfahrzeuge ermittelt, die im Fahrmodus 1 betrieben werden. Für die Betriebsdisposition der einzelnen Schienenfahrzeuge, insbesondere der eingesetzten Lokomotiven, sind diese Informationen jedoch oft ungenügend. Sofern z.B. eine Lokomotive von einer ersten zu einer zweiten Zugskomposition gewechselt wird, so werden für die beiden Zugskompositionen Informationen ermittelt, aber nicht für die gewechselte Lokomotive.

Nachteilig ist zudem, dass diese technischen Systeme jedoch wesentliche Einschränkungen hinsichtlich der Ermittlung von Informationen aufweisen. Insbesondere sind die ermittelten Informationen wesentlichen Beschränkungen unterworfen und umfassen gegebenenfalls nur Positionsdaten oder Kenndaten der Ressourcen. Zudem werden Informationen oft nur für eine Teilmenge von Ressourcen, z.B. nur für Lokomotiven oder zugführende Steuerwagen, ermittelt.

Der Datenaustausch zwischen den Betriebsebenen ist daher nur beschränkt möglich und typischerweise mit relativ grossem Aufwand verbunden. Eine automatische Ermittlung von Informationen und ein automatischer Austausch von Informationen zwischen den Betriebsebenen sind nur beschränkt möglich.

Insbesondere sind die mit den beschriebenen Systemen zur Verfügung gestellten Informationen fest vorgegeben oder nur mit erheblichem Aufwand aktualisierbar und erweiterbar.

Der vorliegenden Erfindung liegt daher die Aufgabe zugrunde, ein verbessertes Verfahren und ein verbessertes Kommunikationssystem für die Verwaltung von Ressourcen anzugeben, die in einem Schienennetz eines Eisenbahnsystems verkehren.

Das Verfahren und das Kommunikationssystem sollen es insbesondere erlauben, Informationen in einfacher Weise, vorzugsweise automatisch, zu ermitteln und praktisch ohne Verzögerung zwischen den Betriebsebenen auszutauschen.

Lokal bei den Ressourcen vorhanden Informationen sollen mit geringem Aufwand erfasst und zu den höheren Betriebsebenen und Rechnersystemen transferiert werden können. Auf den hören Betriebsebenen und in Rechnersystemen vorhandene Informationen sollen praktisch ohne Verzögerungen aktualisiert, bearbeitet und praktisch verzögerungslos den unteren Betriebsebenen zur Verfügung gestellt werden können.

Die Informationen sollen mit geringem Aufwand auf der ersten und zweiten Betriebsebene aktualisierbar und gegebenenfalls erweiterbar sein. Der Informationsbedarf soll auf allen Betriebsebenen vollständig oder zumindest in einem wesentlich erweiterten Umfang abgedeckt werden können.

Anhand des vorzugsweise automatisch erfolgenden Informationsaustauschs soll der Einsatz der Ressourcen individuell oder in Kombination mit weiteren Ressourcen automatisch überprüfbar sein, sodass Konflikte, wie fehlende Eignung, fehlende Betriebsbereitschaft z.B. aufgrund vernachlässigter Wartung oder mangelnde Kompatibilität automatisch detektierbar sind.

Das Kommunikationssystem soll in bestehende Eisenbahnsysteme integrierbar sein und bestehende Informationssysteme und Identifikationssysteme nutzen und/oder ergänzen können.

Der Zugriff einer Betriebsebene auf Informationen einer anderen Betriebsebene soll möglichst automatisch erfolgen und keinen wesentlichen Aufwand seitens des Anwenders, des Benutzers oder der Verwaltung erfordern. Vorzugsweise soll der Informationstransfer automatisch im Rahmen der üblichen Arbeitstätigkeit des Personals des Eisenbahnsystems erfolgen. Gezielte manuelle Eingriffe und weitere mit Aufwand verbunden Tätigkeiten des Personals bzw. der Zugbegleitung oder der Anwender von Dienstfahrzeugen, sollen nicht erforderlich sein.

Zugriffe zu Informationen sollen nach Möglichkeit automatisch mit der Aktualisierung des gesamten Systems verbunden sein, sodass der Gesamtnutzen bzw. der Informationsstand des Gesamtsystems ohne Mehraufwand erhöht wird.

Informationen sollen eine hohe Präzision und Zuverlässigkeit aufweisen und möglichst mit geringer Verzögerung und/oder bedarfsgerecht zur Verfügung gestellt werden.

Von übergeordneter Betriebsebene sollen gegebenenfalls aktualisierte und erweiterte Informationen mit geringem Aufwand und praktisch ohne Verzögerung an Mitarbeiter der untergeordneten Betriebsebenen übertragbar sein. Das Kommunikationssystem soll auch als Führungsinstrument geeignet sein.

Ferner soll das Kommunikationssystem zur einfachen Erledigung konventioneller Verwaltungsaufgaben, insbesondere zur Kennzeichnung der Ressourcen gemäss vorgegebenen Reglementen geeignet sein.

Diese Aufgabe wird mit einem Verfahren und einem Kommunikationssystem gelöst, welche die in Anspruch 1 bzw. 13 angegebenen Merkmale aufweisen. Vorteilhafte Ausgestaltungen der Erfindung sind in weiteren Ansprüchen angegeben.

Das Verfahren dient der Verwaltung von mobilen Ressourcen, insbesondere Schienenfahrzeugen, eines Eisenbahnsystems, die je mit wenigstens einem Datenträger versehen sind, der lokale Ressourcendaten aufweist, die mittels mobilen oder stationären Lesegeräten drahtlos lesbar sind und die zumindest der zugehörigen mobilen Ressourcen individuell zugeordnete Identifikationsdaten umfassen, die in einem Verwaltungsrechner registriert sind.

Erfindungsgemäss ist vorgesehen
a) dass die Identifikationsdaten der mittels eines der mobilen Lesegeräte ausgelesenen lokalen Ressourcendaten als Element oder Argument einer Zieladresse zum Verwaltungsrechner übermittelt werden;
b) dass der Verwaltungsrechner den übermittelten Identifikationsdaten zugeordnete zentrale Ressourcendaten vorzugsweise automatisch an das mobile Lesegerät retourniert; und
c) dass die zentralen Ressourcendaten auf dem mobilen Lesegerät angezeigt oder verarbeitet werden.

Nach Ermittlung von lokalen Ressourcendaten, die möglicherweise nur Identifikationsdaten der betreffenden mobilen Ressource enthalten, werden auf dem mobilen Lesegerät automatisch die zentralen Ressourcendaten dargestellt. Anstelle der wenigen statischen Daten oder Informationen der lokalen Ressourcendaten werden auf dem mobilen Lesegerät praktisch unverzüglich die statischen und/oder dynamischen Daten oder Informationen der zentralen Ressourcendaten für die betreffende mobile Ressource dargestellt.

Dies ist mit zahlreichen weiteren Vorteilen verbunden. Zusätzlich mit der Übermittlung der Identifikationsdaten werden vorzugsweise weitere Daten und Informationen der betreffenden mobilen Ressource zum Verwaltungsrechner übertragen, der in der Folge die zentralen Ressourcendaten aktualisieren kann.

Anhand der gemeldeten Position der mobilen Ressource können ihr Streckendaten übermittelt bzw. diese mit den Möglichkeiten der mobilen Ressource abgeglichen werden. Dies wird als «Streckenkenntnis» bezeichnet: https://de.wikipedia.org/wiki/Streckenkenntnis.

«Streckenkenntnis» ist insbesondere auch bei Rangier- und Baustellenfahrten erforderlich, weshalb bisher üblicherweise ein sogenannter »Begleiter mit Streckenkenntnis« auf dem Rangierfahrzeug oder Dienstfahrzeug mitfuhr. Erfindungsgemäss kann die Streckenkenntnis mit den zugehörigen Informationen und Daten somit praktisch online auf dem Rangierfahrzeug oder Dienstfahrzeug zur Verfügung gestellt werden, sodass auf einen »Begleiter mit Streckenkenntnis« verzichtet werden kann.

Mobile Ressourcen sind alle Objekte des Eisenbahnsystems, die mit einem erfindungsgemässen Datenträger versehen sind, in dem lokale Ressourcendaten, gegebenenfalls nur Identifikationsdaten, enthalten sind, und für die korrespondierende zentrale Ressourcendaten gespeichert sind. Sofern z.B. ein Fahrer einer Lokomotive oder eines Dienstfahrzeugs einen entsprechenden Datenträger mit lokalen Ressourcendaten mit sich führt und für diesen Fahrer lokale Ressourcendaten gespeichert sind, so können diese nach dem erfindungsgemässen Verfahren ebenfalls auf ein Lesegerät heruntergeladen werden. Beispielsweise können auf diese Weise Informationen zu allen entsprechend ausgerüsteten Mitarbeitern bereitgestellt und übertragen werden. Das erfindungsgemässe Verfahren erlaubt daher eine umfassende Verwaltung und Disposition aller verfügbaren mobilen Ressourcen.

Mit der Übertragung von lokalen Ressourcendaten von mobilen Lesegeräten zum Verwaltungsrechner können die zentralen Ressourcendaten auch dann aktualisiert werden, wenn die betreffenden mobilen oder auch stationären Lesegeräte keine Rückübertragung der zentralen Ressourcendaten anfordern.

Für die stationären und/oder mobilen Lesegeräte sind vorzugsweise verschiedene Berechtigungen und/oder Betriebsarten einstellbar oder fest vorgegeben.

In einer ersten vorzugsweisen Betriebsart werden lokale Ressourcendaten aus Datenträgern ausgelesen und mit einer Anforderung zur Rückübertragung der entsprechenden zentralen Ressourcendaten zum Verwaltungsrechner übertragen. Der Verwaltungsrechner retourniert in der Folge, vorzugsweise auf Anforderung gemäss eingestellter Betriebsart, die zentralen Ressourcendaten. In einer zweiten Betriebsart werden lokale Ressourcendaten aus den Datenträgern ausgelesen und ohne Anforderung zur Rückübertragung der entsprechenden zentralen Ressourcendaten zum Verwaltungsrechner übertragen.

Anhand der lokalen Ressourcendaten und gegebenenfalls vom mobilen oder stationären Lesegerät zur Verfügung gestellten Zusatzdaten, die nach der ersten oder zweiten Betriebsart zum Verwaltungsrechner übertragen wurde, kann dieser die zentralen Ressourcendaten anhand der aktuell ermittelten lokalen Ressourcendaten aktualisieren. Die lokalen Ressourcendaten enthalten daher vorzugsweise Daten, die für die Aktualisierung der zentralen Ressourcendaten oder für die Protokollierung relevanter Informationen der Ressourcen von Interesse sind.

Vorzugsweise weist der Datenträger ein erstes und/oder ein zweites Datenträgermodul auf. Aus dem ersten Datenträgermodul sind die zugehörigen lokalen Ressourcendaten von den mit Netzwerkmodulen und/oder RFID-Modulen ausgerüsteten mobilen oder stationären Lesegeräten elektronisch auslesbar. Aus dem zweiten Datenträgermodul sind die zugehörigen lokalen Ressourcendaten vorzugsweise in Form eines zweidimensionalen Codes von den mit einer Kamera ausgerüsteten mobilen oder stationären Lesegeräten optisch lesbar. Die aus dem ersten und zweiten Datenträgermodul auslesbaren lokalen Ressourcendaten sind vorzugsweise identisch, können aber auch voneinander abweichen, z.B. falls unterschiedliche Speicherkapazitäten vorhanden sind.

In vorzugsweisen Ausgestaltungen weist das erste Datenträgermodul eine Steuereinheit auf, die Sensordaten von Sensoren, die der betreffenden mobilen Ressource zugeordnet sind, sammelt und mit den lokalen Ressourcendaten zu den mobilen oder stationären Lesegeräten überträgt. Vorzugsweise werden mittels wenigstens eines Sensors Ortsdaten und/oder Zeitdaten und/oder physikalische Messdaten und/oder Betriebsdaten und/oder Kenndaten der Ressourcen bereitgestellt und zum Lesegerät übermittelt.

Vorzugsweise weist das erste Datenträgermodul wenigstens einen GPS-Sensor auf, welcher Standortdaten des betreffenden Datenträgermoduls liefert, die zusammen mit den Identifikationsdaten zum ersten mobilen Lesegerät übertragen werden. Mit jedem Auslesen lokaler Ressourcendaten und der Kontaktaufnahme mit dem Verwaltungsrechner können daher die vom Verwaltungsrechner überwachten und z.B. in den zentralen Ressourcendaten registrierten zentralen Ressourcendaten, insbesondere die Standortdaten aktualisiert werden.

Die mobilen Lesegeräte stellen vorzugsweise Zusatzdaten, wie Ortsdaten und/oder Zeitdaten und/oder physikalische Messdaten und/oder Daten des Anwenders und/oder Kenndaten des mobilen Lesegeräts bereit und übermitteln diese zusammen mit den gelesenen lokalen Ressourcendaten zum Verwaltungsrechner.

Besonders vorteilhaft ist, dass die Mitarbeiter des Eisenbahnsystems konventionelle Mobiltelefone als Lesegeräte verwenden können. Solche Lesegeräte sind vorzugsweise mit einer Kamera und/oder mit RFID-Technologie und/oder mit Netzwerkmodulen, wie Netzwerkmodulen der Bluetooth Technologie, ausgerüstet, mittels denen lokale Ressourcendaten von den Datenträgern der Ressourcen bzw. vom betreffenden Dienstfahrzeug gelesen werden können.

Vorzugsweise sind entlang dem Schienennetz des Eisenbahnsystems stationäre Lesegeräte vorgesehen, mittels derer lokale Ressourcendaten aus den Datenträgern zugehöriger Ressourcen ausgelesen und gegebenenfalls mit Zusatzdaten, wie Ortsdaten oder weiteren z.B. physikalische Messdaten, zum Verwaltungsrechner übermittelt werden.

Solche stationären Lesegeräte, insbesondere zur bidirektionalen Datenübertragung geeignete Balisen oder Lesegeräte des oben beschriebenen Systems AFI, sind im Eisenbahnnetz bereits implementiert und können funktionell in das erfindungsgemässe Kommunikationssystem integriert werden, sodass praktisch ohne Zusatzaufwand eine breite geographische Abdeckung resultiert. Balisen, die zur bidirektionalen Datenübertragung vorgesehen sind, können ausgelesen werden oder können Daten aus einem Datenträger bzw. einem Transponder auslesen, der mit einer mobilen Ressource verbunden ist. Die Lesegeräte können bei einem routinemässigen Software-Update mit Anwendungssoftware ausgerüstet werden, die das erfindungsgemässe Verfahren in einer oder mehreren Betriebsarten unterstützt.

Zum Ablesen optischer Daten vom zweiten Datenträgermodul wird der Mitarbeiter die Kamera auf den Datenträger bzw. auf eine darauf vorgesehene Kodierung richten, welche die lokalen Ressourcendaten enthält bzw. darstellt. Beispielsweise ist ein zweidimensionaler Code, wie ein QR-Code, vorgesehen, von dem die lokalen Ressourcendaten gelesen werden. Die lokalen Ressourcendaten enthalten zumindest Identifikationsdaten, können aber weiterführende Daten zur zugehörigen mobilen Ressource enthalten. Daten können z.B. aus einer dynamischen Datenbank in der Cloud abgerufen werden, die mit einer Internetadresse kontaktiert wird.

Zum elektronischen Auslesen werden Verfahren der RFID-Technologie oder der Netzwerktechnologie eingesetzt, wie Technologien von ad-hoc Netzwerken, wie Bluetooth, oder Netzwerktechnologien mit grösserer Reichweite, wie das Long Range Wide Area Network (LoRaWAN); siehe https://de.wikipedia.org/wiki/Long Range Wide Area Network).

Bei Verfahren der RFID-Technologie werden Abfrageimpulse ausgesendet und Antwortimpulse von einem Transponder, der auf dem Datenträger vorgesehen ist, ausgewertet. Bei der Verwendung von Netzwerktechnologie werden lokale Netzwerke automatisch aufgebaut und lokale Ressourcendaten übertragen. Erfindungsgemässe Datenträger können dabei eine eigene Stromversorgung aufweisen oder z.B. mittels der Abfrageimpulse, fremdgespeist werden.

Die Datenträger weisen vorzugsweise ein Gehäuse auf, welches vorzugsweise seitlich an einem Schienenfahrzeug montiert wird. Es ist auch möglich mehrere Datenträgermodule z.B. auf beiden Seiten des Schienenfahrzeugs zu montieren.

Zur automatisierten Steuerung der Datenübertragung von den Ressourcen zum mobilen oder stationären Lesegerät sowie zum Verwaltungsrechner und weiter zum Empfang der zentralen Ressourcendaten ist ein Anwendungsprogramm vorgesehen. Das Anwendungsprogramm erlaubt vorzugsweise die wahlweise Umschaltung zwischen mehreren Betriebsarten. In einer ersten Betriebsart werden die lokalen Ressourcendaten gelesen und zum Verwaltungsrechner übertragen. Gleichzeitig wird die Rückübertragung der entsprechenden zentralen Ressourcendaten angefordert. In einer zweiten Betriebsart werden lediglich die lokalen Ressourcendaten gelesen und zum Verwaltungsrechner übertragen, ohne die Rückübertragung der zentralen Ressourcendaten anzufordern. Eine dritte und vierte Betriebsart erlauben es z.B., ergänzend zur ersten und zweiten Betriebsart vom Anwender festgelegte Zusatzdaten, z.B. administrative Daten zur Protokollierung oder Steuerdaten zur Inanspruchnahme weiterer Dienste, an den Verwaltungsrechner zu übertragen. In der dritten Betriebsart, mittels der z.B. die erste Betriebsart ergänzt wird, kann der Anwender eine den Ressourcen zugeordnete Bestellung aufgeben, die vom Verwaltungsrechner ausgeführt wird. Beispielsweise kann eine Wartungsanforderung übermittelt werden. Entsprechend codierte Anforderungen können vom Verwaltungsrechner erfasst und z.B. an einen Wartungsrechner übermittelt werden. Grundsätzlich können alle Dienstleistungen angefordert werden, die zentralisiert zur Verfügung gestellt werden.

Für die wählbaren Betriebsarten ist vorzugsweise festgelegt, welche Technologien zum Auslesen der lokalen Ressourcendaten eingesetzt werden. Die Möglichkeiten zum Auslesen über optische Kommunikationsmittel, RFID-Technologie und Netzwerktechnologie können vorzugsweise wahlweise zugeschaltet, abgeschaltet oder miteinander kombiniert werden.

Für die zweite und dritte Betriebsart können beispielsweise nur die Kommunikationsmittel der RFID-Technologie und/oder der Netzwerktechnologie eingeschaltet werden. Sobald ein Mitarbeiter des Eisenbahnsystems, gegebenenfalls auch ein Dritter, mit seinem Kommunikationsendgerät, z.B. Mobiltelefon, das mit einer erfindungsgemässen Anwendung ausgerüstet und aktiviert ist, in den Kontaktbereich eines Datenträgers einer Ressourcen gelangt, werden lokale Ressourcendaten automatisch ausgelesen und zum Verwaltungsrechner übertragen, ohne jedoch eine Rückübertragung von Daten bzw. zentraler Ressourcendaten anzufordern. Da ein Eisenbahnsystem üblicherweise zahlreiche Mitarbeiter beschäftigt, die mit einem Mobiltelefon ausgerüstet sind, können daher laufend lokale Ressourcendaten im Eisenbahnsystem gesammelt und zum Verwaltungsrechner übertragen werden. Da Ressourcen des Eisenbahnsystems, wie Eisenbahnwagen, Lokomotiven Dienstfahrzeuge, allein oder in Kombination, regelmässig von Mitarbeitern des Eisenbahnsystems begleitet werden, erfolgt eine ebenso regelmässige Erfassung von lokalen Ressourcendaten, wobei über jedes mobile Lesegerät bzw. Mobiltelefon täglich eine Vielzahl von lokalen Ressourcendaten bzw. Datensätzen einzelner Ressourcen ermittelt werden. Geht ein Mitarbeiter z.B. entlang einer Zugskomposition, so wird er mit seinem Mobiltelefon sequenziell die lokalen Ressourcendaten jeder Komponente der Zugskomposition erfassen. Vorzugsweise wird nun nicht jeweils nach Ermittlung der lokalen Ressourcendaten einer einzelnen Komponente eine Datenverbindung zum Verwaltungsrechner aufgebaut. Stattdessen werden vorzugsweise alle innerhalb einer festen oder variablen Zeitspanne aufgenommenen lokalen Ressourcendaten gruppiert, und/oder geordnet und/oder gefiltert zum Verwaltungsrechner übertragen. Beispielsweise wird nach Ermittlung von Ressourcendaten einer Komponente jeweils ein Timer gestartet bzw. zurückgesetzt, durch den eine Zeitspanne definiert wird. Falls innerhalb dieser Zeitspanne keine weiteren lokalen Ressourcendaten ermittelt werden, so werden die bisher ermittelten lokalen Ressourcendaten zum Verwaltungsrechner übermittelt. Vorzugsweise wird vorgesehen, dass jeweils nach einer maximalen Zeitspanne von z.B. zehn Minuten eine Datenübertragung zum Verwaltungsrechner erfolgt, falls lokale Ressourcendaten ermittelt wurden. Doppelt erfasste lokale Ressourcendaten werden vorzugsweise nach Zeitrang gelöscht.

Das Anwendungsprogramm erlaubt vorzugsweise, die ermittelten lokalen Ressourcendaten und/oder zentralen Ressourcendaten gemäss festgelegten Prozeduren oder wahlweise einstellbaren Prozeduren zu behandeln, insbesondere vollständig oder teilweise darzustellen und/oder zu filtern und/oder zu sortieren und/oder zu ordnen und/oder zu prüfen, insbesondere mit Vorgaben zu vergleichen und/oder zu speichern und/oder zu protokollieren und/oder anderweitig zu verarbeiten. Durch diese Massnahmen gelingt es, die ermittelten lokalen oder zentralen Ressourcendaten zweckgebunden zu optimieren und mit minimaler Redundanz und maximaler Aktualität zu verwerten.

Seitens der mobilen und/oder stationären Lesegeräte werden als Zusatzdaten vorzugsweise Zeitdaten und/oder physikalische Messdaten z.B. betreffend die Temperatur oder Luftfeuchtigkeit und/oder Projektdaten betreffend die Nutzung der Ressourcen und/oder Personaldaten betreffend die Nutzung der Ressourcen und/oder Eingabedaten oder Steuerdaten des Anwenders bereitgestellt und mit den lokalen Ressourcendaten zum Verwaltungsrechner übertragen. Ferner können Umgebungsdaten erfasst und übertragen werden, sodass gegenseitige Abhängigkeiten mit Ressourcendaten berücksichtigt werden können.

Das Anwendungsprogramm erlaubt vorzugsweise auch die zumindest teilweise Auswertung der lokalen Ressourcendaten und/oder der zentralen Ressourcendaten, um vorgegebene Funktionen erfüllen zu können. Durch Auswertung der lokalen Ressourcendaten werden die Identifikationsdaten ermittelt, die anschliessend in die Zieladresse integriert werden.

Der Verwaltungsrechner weist vorzugsweise eine relationale Datenbank mit Datensätzen auf, die z.B. nach Identifikationsnummern indiziert ist. Die Zieladresse verweist mit der ermittelten Identifikationsnummer vorzugsweise auf zentrale Ressourcendaten in der Ausgestaltung eines Datensatzes der Datenbank, der in der Folge anhand der lokalen Ressourcendaten aktualisiert und gegebenenfalls ausgelesen und zum mobilen Lesegerät retourniert wird.

In einer bevorzugten Ausgestaltung wird eine Zieladresse als Link zu einer Seite eines Netzwerks, wie des Internets oder eines Intranets, gebildet, mittels dessen der Datenaustausch mit dem Verwaltungsrechner erfolgt. Mittels des Links kann eine beliebig formatierte Datei vom Verwaltungsrechner geladen werden. Nach dem Empfang der Mitteilung mit Zieladresse und lokalen Ressourcendaten werden diese vom Verwaltungsrechner verwertet, insbesondere zur Aktualisierung zentraler Ressourcendaten. Ergänzend werden vorzugsweise Analysen der empfangenen lokalen Ressourcendaten durchgeführt, um die betreffende mobile Ressource sowie deren Kompatibilität mit weiteren Ressourcen zu prüfen und die sogenannte Streckenkenntnis zu erstellen und zur Ressourcen zu übertragen.

Anhand der übermittelten lokalen Ressourcendaten und der Zusatzdaten werden die zentralen Ressourcendaten aktualisiert und gegebenenfalls zumindest teilweise protokolliert. Im Verwaltungsrechner können somit praktisch alle für den Zustand, den Betrieb und den Standort der Ressourcen relevanten Daten praktisch automatisch erfasst und protokolliert werden. In einem Protokoll werden z.B. Standortverschiebungen, Nutzungsdaten, Fehlermeldungen, Benutzerdaten aufgeführt und gegebenenfalls mit vorgegebenen Vorschriften und Grenzwerten verglichen. Anhand der Auswertung der Protokolldaten können z.B. Wartungsarbeiten geplant und/oder Einsatzpläne verifiziert und überarbeitet und/oder buchhalterische Abrechnungen ausgeführt werden.

Besonders vorteilhaft ist, dass die zentralen Ressourcendaten, wie darin eingetragene Einsatzpläne und/oder Einsatzvorschriften und/oder Wartungspläne auf der übergeordneten Betriebsebenen wahlweise geändert werden können. Änderungen für eine Vielzahl von Ressourcen werden im Verwaltungsrechner vorzugsweise gruppenweise vorgenommen. Sofern technische Bedingungen für einen Typ von Ressourcen, z.B. für bestimmte Dienstfahrzeuge oder Lokomotiven, ändern, können im Verwaltungsrechner die entsprechenden Datensätze selektiert und gruppenweise geändert werden. Ebenso können die externen Ressourcendaten von Ressourcen, die einem bestimmten Projekt zugeordnet sind, selektiert und gruppenweise geändert werden. Sofern der Zeitpunkt des Projektabschlusses verschoben wird, kann dieser neue Zeitpunkt für alle Ressourcen registriert werden. Für Ressourcen können gruppenweise neue Wartungspläne, Einsatzpläne und Einsatzstandorte festgelegt werden. Ausserdem kann die Zugehörigkeit der Ressourcen zu einem Eisenbahninfrastrukturunternehmens (EIU) und der Wechsel zwischen den Bereichen unterschiedlicher (EIU) festgestellt werden.

Der Verwaltungsrechner kann ein einzelner Rechner oder ein Verbund von mehreren Rechnern sein. Mit dem Verwaltungsrechner können zudem weitere Betriebsrechner des Eisenbahnsystems oder auch externe Rechner verbunden sein, die Daten für die Aktualisierung der zentralen Ressourcendaten liefern oder die zentrale Ressourcendaten abfragen, um weitere Aufgaben zu erfüllen. Beispielsweise kann der Verwaltungsrechner mit Rechnern von Lieferanten verbunden sein, aus denen aktuelle Informationen, wie Wartungsinformationen oder Spezifikationen zu den eingekauften Ressourcen, heruntergeladen werden können.

Anhand der mobilen Lesegeräte können mit den zentralen Ressourcendaten somit alle wesentlichen Informationen vom Verwaltungsrechner heruntergeladen werden. Beispielsweise kann ein Projektleiter vor Ort auf den Verwaltungsrechner zugreifen und die zentralen Ressourcendaten für die ihm zugeordneten Ressourcen ändern, wonach die Projektmitarbeiter die geänderten Projektinformationen vor Inbetriebnahme der Ressourcen auslesen können. Ein Mitarbeiter besteigt z.B. sein Dienstfahrzeug und empfängt auf seinem Lesegerät automatisch die diesem Dienstfahrzeug zugeordneten zentralen Ressourcendaten, welche den Einsatz des Dienstfahrzeugs beschreiben.

Besonders vorteilhaft ist, dass das erfindungsgemässe Kommunikationssystem mit geringem Aufwand in ein bestehendes Kommunikationssystem eines Eisenbahnnetzes integriert werden kann, um dessen Funktionalitäten zu nutzen.

Nachfolgend wird die Erfindung anhand von Zeichnungen näher erläutert. Dabei zeigt:
- Fig. 1: ein erfindungsgemässes Kommunikationssystem zur Verwaltung von mobilen Ressourcen 1001 in einem Eisenbahnsystem; und
- Fig. 2: das aus [1], EP2631152B1, bekannte Kommunikationssystem zur Verwaltung von mobilen Ressourcen in einem Eisenbahnsystem, das durch ein erfindungsgemässes Kommunikationssystem gemäss Fig. 1 ergänzt wurde.

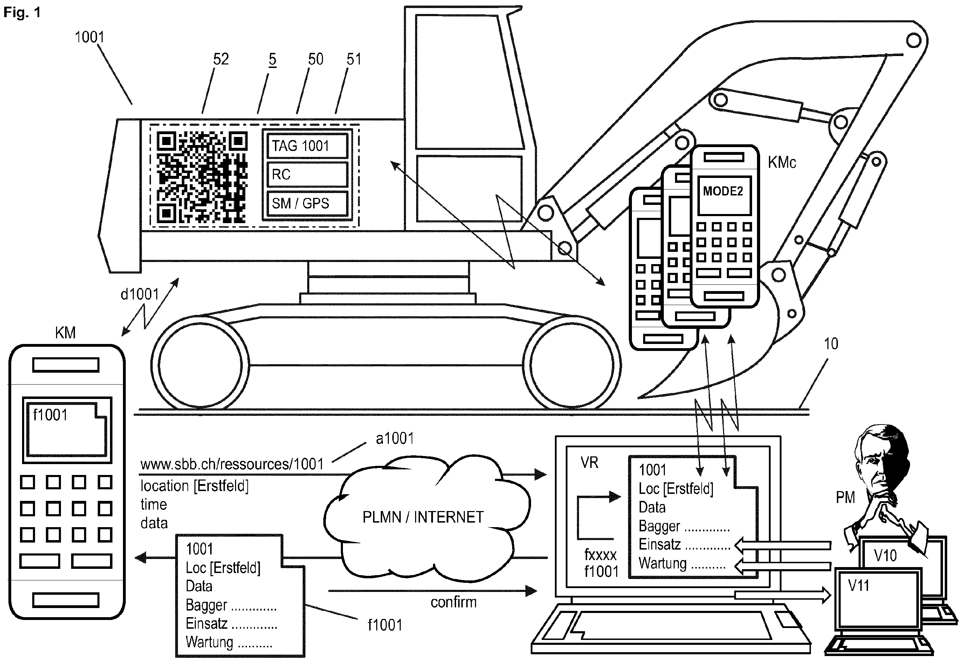

Fig. 1 zeigt ein erfindungsgemässes Kommunikationssystem für die Verwaltung von mobilen Ressourcen 1001 eines Eisenbahnsystems, die je mit wenigstens einem Datenträger 5 versehen sind, in dem lokale Ressourcendaten d1001 gespeichert, eingeprägt oder aufgedruckt sind. Diese lokalen Ressourcendaten d1001 können mit Lesegeräten KM erfasst und über ein Netzwerk, z.B. das Mobilfunknetz PLMN und das Internet, zu einem Verwaltungsrechner VR übertragen werden. Diese Übertragung kann mit oder ohne Antrag um Rückübermittlung einer Datei mit zentralen Ressourcendaten f1001 erfolgen, die zu den lokalen Ressourcendaten d1001 bzw. den darin enthaltene Identifikationsdaten 1001 korrespondieren.

Der in Fig. 1 gezeigte Datenträger 5, der auf einem auf Schienen 10 geführten Dienstfahrzeug 1001 sichtbar angeordnet ist, weist in dieser vorzugsweisen Ausgestaltung zwei Datenträgermodule 51, 52 auf, in denen lokale Ressourcendaten d1001 in unterschiedlicher Weise gespeichert sind.

Die Datenträgermodule 51, 52 sind vorzugsweise in einem schematisch gezeigten Gehäuse 50 des Datenträgers 5 gehalten und vorzugsweise gegen schädliche Umwelteinflüsse und Vandalenakte geschützt. Beispielsweise weist das Gehäuse eine transparente Schutzabdeckung und einen Rahmen mit Flanschen auf der mit einem Montageteil, z.B. einer Abdeckung, des Schienenfahrzeugs 1001 verbunden ist.

In Fig. 1 sind die beiden Datenträgermodule 51, 52 nebeneinander gezeigt. Das erste Datenträgermodul 51 kann jedoch vorteilhaft hinter das zweite Datenträgermodul 52 verschoben werden, um die Abmessungen des Datenträgers 5 zu reduzieren.

Das erste Datenträgermodul 51 weist ein elektronisches und/oder ein physikalisches Speichermodul auf, aus dem die lokalen Ressourcendaten d1001 mittels RFID-Technologie und/oder mittels der Technologie drahtloser Netzwerke, insbesondere der Bluetooth-Technologie, abgerufen werden können. Beispielsweise umfasst das erste Datenträgermodul 51 einen aktiven oder passiven RFID-Transponder mit einem Chip mit einem Halbleiterspeicher, in dem die lokalen Ressourcendaten gespeichert sind, oder einen Oberflächenwellenleiter mit Oberflächenwellenstrukturen, in die die lokalen Ressourcendaten, insbesondere Identifikationsdaten eingeprägt sind. Zusätzlich oder alternativ können Netzwerkmodule mit einem Speichermodul vorgesehen sein, in denen die lokalen Ressourcendaten gespeichert sind. Die lokalen Ressourcendaten d1001 können vom Lesegerät KM daher drahtlos aus dem ersten Datenträgermodul 51 ausgelesen werden.

Das zweite Datenträgermodul 52 weist vorzugsweise einen zweidimensionalen Code, nämlich einen QR-Code auf, in dem die lokalen Ressourcendaten gespeichert sind. Durch Lesen des zweidimensionalen Codes können nach Dekodierung die folgenden lokalen Ressourcendaten d1001 für die mobile Ressource 1001 bzw. das Dienstfahrzeug 1001 ermittelt werden:
EVN__________
SBB
Fahrzeug 1001
www.sbb.ch/ressources/1001

In der prinzipiellen Ausgestaltung der Erfindung umfassen die lokalen Ressourcendaten d1001 nur die individuelle Identifikationsnummer und keine weiteren Daten. Weitere Daten sind nur in vorzugsweisen Ausgestaltungen vorgesehen. Zur Verarbeitung dieser weiteren Daten sind im Anwendungsprogramm des Lesegeräts entsprechende Instruktionen vorgesehen.

Grundsätzlich können die heruntergeladenen Daten auch zur Programmierung der mobilen Ressource verwendet werden. Beispielsweise ist für die betreffende mobile Ressource die letzte Firmware registriert, die automatisch mit einer neueren Version überschrieben wird, falls entsprechende Instruktionen vorliegen.

Die lokalen Ressourcendaten umfassen eine europäische Fahrzeugnummer (EVN), einen Hinweis auf den Inhaber (SBB), einen Hinweis auf die Art des Gegenstandes (Fahrzeug), Identifikationsdaten bzw. eine Identifikationsnummer des Schienenfahrzeugs sowie einen Internetlink, der zu einer dynamischen Datenbank übertragbar ist, um zentrale Ressourcendaten abzurufen.

Dieselben lokalen Ressourcendaten d1001 können im ersten Datenträgermodul 51 gespeichert sein. In vorzugsweisen Ausgestaltungen können sich die in den Datenträgermodulen 51, 52 gespeicherten lokalen Ressourcendaten jedoch unterscheiden. Das erste Datenträgermodul 51 weist üblicherweise eine grössere Speicherkapazität auf, sodass darin zusätzliche Daten gespeichert werden können. Wie erwähnt, können die lokalen Ressourcendaten d1001 auch nur einen Identifikationscode umfassen.

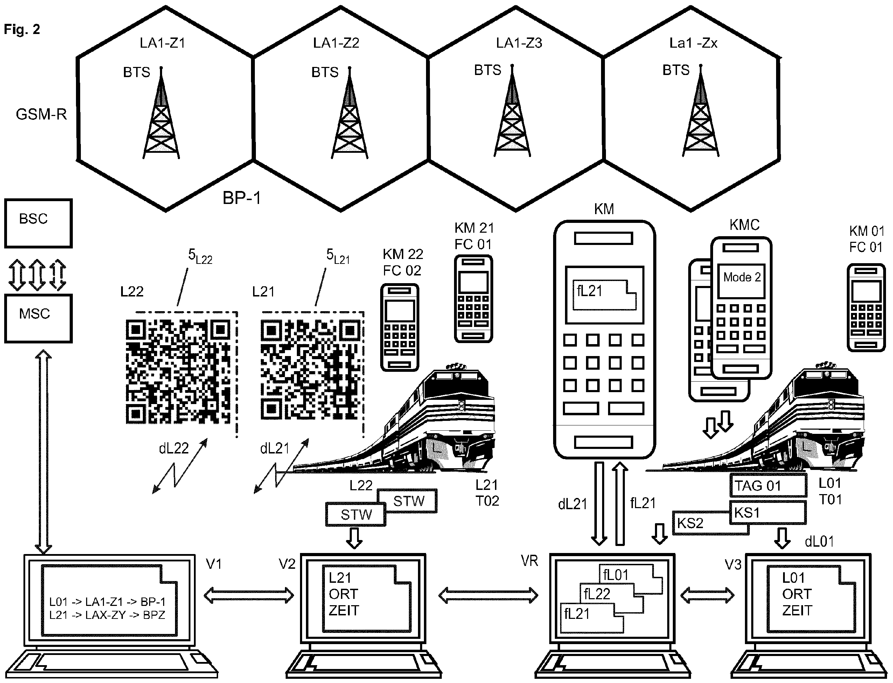

Die lokalen Ressourcendaten d1001 können durch mobile oder stationäre Lesegeräte KM, KS (siehe Fig. 2, KS1, KS2) drahtlos ausgelesen werden. In bevorzugten Ausgestaltungen können mittels der mobilen Lesegeräte KM die Daten aus dem ersten und/oder dem zweiten Datenträgermodul 51, 52 ausgelesen werden. Die mobilen Lesegeräte KM sind dazu mit elektrooptischen Modulen und/oder RFID-Modulen und/oder Netzwerkmodulen ausgerüstet.

Da handelsübliche Mobiltelefone, Tablet-Computer oder Laptops bereits elektro-optische Module und Netzwerkmodule für Mobilfunknetze, drahtlose Netzwerke (WLAN) und ad-hoc Netzwerke (Bluetooth) oder Netzwerktechnologien mit grösserer Reichweite, wie das Long Range Wide Area Network (LoRaWAN), aufweisen, können diese mit einer zur Durchführung des erfindungsgemässen Verfahrens vorgesehenen Anwendungssoftware ausgerüstet und als mobile Lesegeräte KM verwendet werden. Die Anwendungssoftware unterstützt die unidirektionale oder bidirektionale Datenübertragung von den Datenträgern und zum Verwaltungsrechner VR.

Wie dies beschrieben wurde, erlaubt es das Anwenderprogramm des mobilen Lesegeräts KM vorzugsweise, zwischen verschiedenen Betriebsarten umzuschalten. Grundsätzlich kann vorgesehen werden, dass die lokalen Ressourcendaten d1001 gezielt und/oder automatisch gelesen werden können. Beispielsweise können mit dem mobilen Lesegerät KM Daten automatisch elektronisch vom ersten Datenträgermodul 51 und/oder optisch vom zweiten Datenträgermodul 52 gelesen werden. Einschränkungen auf eine bestimmte Betriebsart können vom Betreiber des Eisenbahnnetzes fest vorgegeben oder vom Anwender wahlweise eingestellt werden. Die mobilen Lesegeräte KM können verschiedenen Gruppen von Anwendern zugeteilt werden. Den Anwendern der ersten Gruppe, die mit den Ressourcen 1001 arbeiten, können höhere Nutzerrechte zugeordnet werden, sodass ihnen die lokalen Ressourcendaten und/oder die zentralen Ressourcendaten, die anhand der lokalen Ressourcendaten vom Verwaltungsrechner VR abrufbar sind, vollständig zugänglich sind.

Ferner kann eine zweite Gruppe von Anwendern oder Mitarbeitern des Eisenbahnsystems, gegebenenfalls Dritten, vorgesehen sein, denen keine oder nur reduzierte Nutzerrechte zugeordnet sind, und bei denen das erfindungsgemässe Anwendungsprogramm lediglich im Hintergrund läuft, um lokale Ressourcendaten d1001 zu sammeln und zum Verwaltungsrechner VR zu übertragen, vorzugsweise ohne dass dies der Anwender selbst initiiert.

Die von Datenträgern 5 bereitgestellten lokalen Ressourcendaten d1001 umfassen Identifikationsdaten 1001 der mobilen Ressource 1001 sowie vorzugsweise weitere Daten, wie Ortsdaten, Betriebsdaten, Messdaten, Umgebungsdaten, etc.. Zur Sammlung dieser Daten sind Sensoren SM/GPS vorgesehen, deren Signale von einer Steuereinheit RC im ersten Datenträgermodul 51 erfasst und mit den Identifikationsdaten 1001 zum Lesegerät KM übermittelt werden.

Auch das Lesegerät KM ist vorzugsweise derart ausgebildet, dass Zusatzdaten, wie Zeitdaten, Ortsdaten, Projektdaten, Anwenderdaten, bereitgestellt und mit den ermittelten lokalen Ressourcendaten d1001 zum Verwaltungsrechner VR übertragen werden können.

Fig. 1 zeigt, dass die Identifikationsdaten 1001 als Teil einer Zieladresse a1001 zum Verwaltungsrechner VR übertragen werden. Dabei kann das Lesegerät KM die exemplarisch gezeigte Internetadresse www.sbb.ch/ressources/1001 verwenden, in der die Identifikationsdaten eingebettet sind. Alternativ können die Identifikationsdaten 1001 anderweitig aus den lokalen Ressourcendaten extrahiert und in eine Zieladresse a1001 integriert werden. Die lokalen Ressourcendaten d1001 oder ein Teil davon werden mit der Zieladresse a1001 sowie mit Ortsangaben (location [Erstfeld]), Zeitangaben (time) sowie Zusatzdaten (data) zum Verwaltungsrechner VR übertragen. Im Verwaltungsrechner VR ist eine Datenbank mit zentralen Ressourcendaten fxxx vorgesehen, in der ein Datensatz oder ein File f1001 der betreffenden mobilen Ressource 1001 vorgesehen und mittels der Zieladresse a1001 direkt oder indirekt selektierbar ist.

Wie dies in Fig. 1 gezeigt ist, empfängt das mobile Lesegerät KM die zentralisierten Ressourcendaten bzw. das entsprechende File f1001, das vom Verwaltungsrechner VR über das Mobilfunknetz PLMN und/oder das Internet zurück übertragen wird. Mittels des Anwendungsprogramms werden die zentralisierten Ressourcendaten bzw. das entsprechende File f1001 auf dem Display des Lesegeräts KM angezeigt. Das File f1001, das ein beliebiges Format aufweisen kann, z.B. ein pdf-File oder ein xls-File, kann in der Folge beliebig verwendet und verarbeitet, z.B. auf einem Drucker ausgedruckt werden.

Das erfindungsgemässe Kommunikationssystem kann nicht nur als Informationssystem für den Anwender und als Verwaltungssystem für übergeordnete Betriebsebenen, sondern auch als Führungsinstrument eingesetzt werden. In der übergeordneten Betriebsebene können vom Führungspersonal Planungsdaten, Projektdaten, Einsatzdaten, Wartungsdaten, etc. direkt oder über einen Rechnerverbund z.B. einen Planungsrechner V10 vorzugsweise automatisch eingegeben werden. Daten können z.B. auf ein Projekt bezogen, spezifisch für die verwalteten Ressourcen, spezifisch für geographische Gebiete, oder spezifisch für bestimmte Streckenabschnitte und Anwender oder Anwendergruppen in die zentralen Ressourcendaten f1001 eingegeben werden. Mit einem nach rechts gerichteten Pfeil ist ferner symbolisiert, dass aus den aktualisierten zentralen Ressourcendaten f1001 auch eine Teilmenge extrahiert und in einem weiteren Rechner V11 weiterverarbeitet werden kann. Der Rechner V11 ist z.B. in Wartungsrechner, der die Betriebsstunden überwacht, oder ein Buchhaltungsrechner der die Betriebsstunden verrechnet.

Für die Kommunikation zwischen den mobilen Lesegeräten KM und dem Verwaltungsrechner VR können beliebige Kommunikationsprotokolle festgelegt werden. Sofern das erfindungsgemässe Kommunikationssystem als Führungsinstrument eingesetzt wird, wird vorzugsweise vorgesehen, dass der Erhalt der zentralen Ressourcendaten f1001 zu diesem Zweck quittiert wird (siehe die mit einem Pfeil symbolisierte Meldung "confirm").

Der beschriebene Vorgang kann bei intakten Kommunikationsverbindungen praktisch verzögerunglos durchgeführt werden, sodass nach dem Empfang der lokalen Ressourcendaten d1001 vom Datenträger 5 die zentralen Ressourcendaten f1001 auf dem Lesegerät KM sofort dargestellt werden. Anhand des mobilen Lesegeräts KM hat der Anwender daher sofortigen Zugriff auf die zentralen Ressourcendaten f1001, die möglicherweise relevante Zusatzinformationen enthalten.

Fig. 1 zeigt weitere mit erfindungsgemässer Anwendungssoftware ausgerüstete Lesegeräte KMc, typischerweise konventionelle Mobilendgeräte, die von Mitarbeitern oder Kunden des Eisenbahnsystems an den Ressourcen 1001 des Eisenbahnsystems vorbeigeführt werden. Bei genügender Annäherung z.B. in einem Bereich von 1m - 20m treten diese Lesegeräte KMc automatisch in Kontakt mit Datenträgern 5 und empfangene lokale Ressourcendaten d1001, die in der Folge vorzugsweise zusammen mit Ortsinformationen und/oder Zeitinformationen automatisch an den Verwaltungsrechner VR übermittelt werden. Das implementierte Anwendungsprogramm steuert die vorzugsweise unidirektionale Datenübertragung derart, dass lokale Ressourcendaten von den Datenträgern 5 der Ressourcen gelesen und zum Verwaltungsrechner VR übermittelt werden. Aufgrund der hohen Anzahl von Mitarbeitern, gegebenenfalls Kunden, mit mobilen Lesegeräten KM, KMc wird gewährleistet, dass die zentralen Ressourcendaten fxxxx praktisch aller Ressourcen des Eisenbahnsystems praktisch ohne zusätzlichen Aufwand und nur mit geringen zeitlichen Verzögerungen regelmässig aktualisiert werden.

Fig. 2 zeigt Teile des eingangs beschriebenen Kommunikationssystems (siehe [1], EP2631152B1), das durch ein erfindungsgemässes Kommunikationssystem gemäss Fig. 1 ergänzt oder erweitert wurde. Das erfindungsgemässe Kommunikationssystem kann daher in bestehende Kommunikationssysteme oder Verwaltungssysteme integriert werden.

Schematisch gezeigt ist ein Betriebspunkt BP-1 eines Schienennetzes mit Ressourcen, nämlich Zügen T01, T02 mit Eisenbahnwagen und Lokomotiven L01, ..., L22. Die Lokomotiven L01, ..., L22 können mittels zugehörigen Mobilendgeräten KM01, KM02 bei einem zellularen Mobilfunknetz GSM-R funktional registriert werden, welches z.B. gemäss den Spezifikationen des EIRENE (EUROPEAN INTEGRATED RAILWAY RADIO ENHANCED NETWORK) - Systems operiert.

Weiter ist illustriert, dass die Lokomotive L01 des Zuges T01 ein Identifikationsmodul TAG 01 aufweist, dessen Daten von der Balise KS1, die zur bidirektionalen Datenübertragung geeignet ist, ausgelesen und zu einem ETCS-Rechner V3 übertragen werden, welcher die Daten in einer Tabelle registriert. Für die Erfindung ist wesentlich, dass Daten von der mobilen Ressource zum stationären Lesegerät übertragbar sind, weshalb eine Balise, die zur unidirektionalen Datenübertragung vom Datenträger der mobilen Ressource zur Balise KS1 ebenfalls geeignet ist.

Ferner ist ein Zuglauf-Rechner V2 gezeigt, dem von einem Verkehrsrechner die geplanten Zuglaufdaten und von Stellwerken STW die realisierten Zuglaufdaten zugeführt werden.

Ortsdaten, die anhand des Verfahrens von [1], EP2631152B1, für Lokomotiven L01, L21, L22 ermittelt werden, die typischerweise im Betriebsmodus 1 verkehren, werden im Mobilfunkrechner V1 registriert. Die Mobilendgeräte KM01, KM21, KM22, die ein Mobile Equipment ME und ein Subscriber Identification Module SIM aufweisen, können Verbindungen mit Feststationen BTS (Base Tranceiver Station) aufnehmen, denen eine Steuereinheit BSC (Base Station Controller) zugeordnet ist, welche mit einem Mobile Services Switching Center MSC verbunden ist. Von den Feststationen BTS werden geographische Bereiche bzw. Funkzellen abgedeckt, innerhalb denen der Rufaufbau und die Verbindung immer über die Feststation BTS erfolgen. Gezeigt ist ferner ein Aufenthaltsbereich (Location Area) LA1, welcher mehrere Zellen LA1-Z1, ..., LA1-Zx umfasst. Sofern die Mobilendgeräte KM01, KM21, KM22 innerhalb des Aufenthaltsbereichs LA1 verschoben werden, wird registriert, in welchen Zellen LA1-Z1, ..., LA1-Zx sich die Mobilendgeräte KM01, KM21, KM22 anmelden und mit den zugehörigen Ressourcen L01, ..., L22 befinden. Die ermittelten Ortsdaten werden im Mobilfunkrechner V1 registriert.

Fig. 2 zeigt daher drei bereits in [1] beschriebene Kommunikationssysteme, mittels denen Daten von Ressourcen des Eisenbahnsystems ermittelt werden können. Ortsdaten werden für identifizierte Ressourcen, vornehmlich Lokomotiven, durch die Überwachung von Funkzellen, die Verwendung von Daten von Stellwerken sowie von Daten des Sicherungssystems ermittelt. Für eine präzise Zuordnung der Lokomotiven L01, L21, L22 zu den Zügen T01, T02 durch Überwachung von Funkzellen sind Zugfahrten durch mehrere Funkzellen zu überwachen. Auch die Erfassung von Daten im ETCS-Rechner V3 erfordert die Bewegung im Schienennetz mit Überfahrt von Balisen KS1. Die genannten Kommunikationssysteme bzw. Verwaltungssysteme liefern redundante Daten, die auf einzelne Ressourcen, insbesondere Lokomotiven, beschränkt sind und im wesentlichen Ortsinformationen der Ressourcen enthalten, die in grösseren zeitlichen Abständen ermittelt werden.

Zusätzlich sind die Elemente des erfindungsgemässen Kommunikationssystems mit dem Verwaltungsrechner VR gezeigt, der mit den Rechnern V1, V2, V3 der benachbarten Kommunikationssysteme, Sicherungssysteme und Stellwerksysteme Daten austauschen kann. Die Rechner V1, V2, V3 und VR können einen Verbund bilden. Deren Tabellen können auch in einem einzigen Rechner, z.B. den Verwaltungsrechner VR zusammengeführt werden. Das erfindungsgemässe Kommunikationssystem kann daher unabhängig oder im Verbund mit weiteren Systemen eingesetzt werden. Die Daten der verschiedenen Kommunikationssysteme können gegenseitig verifiziert werden. Nach dem Ausbau des erfindungsgemässen Kommunikationssystems und sobald die zentralen Ressourcendaten fxxxx im Verwaltungsrechner VR den Erwartungen genügen, können andere Systeme oder Teilsysteme abgeschaltet werden.

Exemplarisch ist gezeigt, dass die Lokomotiven L21 und L22 je mit einem Datenträger 5L21 bzw. 5L22 gemäss Fig. 1 versehen sind. Diese Datenträger 5L21 bzw. 5L22 enthalten wiederum ein erstes und/oder ein zweites Kommunikationsmodul 51, 52 aus denen wahlweise lokale Ressourcendaten optisch und/oder elektronisch ausgelesen werden können.

Mittels des mobilen Lesegeräts KM, in dem die erste Betriebsart eingestellt ist und den weiteren mobilen Lesegeräten KMC, in denen die zweite Betriebsart (Mode2) eingestellt ist, können die lokalen Ressourcendaten dL21, dL22 aus den Datenträgern 5L21 bzw. 5L22 ausgelesen werden.

Exemplarisch ist gezeigt, dass mit dem mobilen Lesegerät KM die lokalen Ressourcendaten dL21 des Datenträgers 5L21 optisch oder elektronisch ausgelesen und zum Verwaltungsrechner VR übertragen wurden, der in Erwiderung die zentralen Ressourcendaten fL21 zum mobilen Lesegerät KM retourniert hat.

Das optische Auslesen des Datenträgers 5L21 ergibt die folgenden lokalen Ressourcendaten, gemäss denen das Schienenfahrzeug mit Identifikationsnummer 11601 eine Lokomotive des Typs Re 6/6 ist. Mit der Identifikationsnummer 11601 oder dem Internetlink werden die zentralen Ressourcendaten fL21 im Verwaltungsrechner VR selektiert und heruntergeladen.
EVN__________
SBB
Fahrzeug 11601 [Re 6/6]
www.sbb.ch/ressources/11601

Mittels der weiteren mobilen Lesegeräte KMC, in denen die zweite Betriebsart (Mode2) eingestellt ist, werden die genannten lokalen Ressourcendaten dL21 erfasst und automatisch zum Verwaltungsrechner VR übertragen. Der unidirektionale Datentransfer wird von den installierten Anwendungen im Hintergrund ausgeführt.

Sofern beispielsweise der Zugführer über eines der mobilen Lesegeräte KMC verfügt und an den Lokomotiven L21, L22 vorbei geht, werden zuerst die lokalen Ressourcendaten dL21 der Lokomotive L21 und anschliessend die lokalen Ressourcendaten dL22 der Lokomotive L22 ausgelesen und zum Verwaltungsrechner übertragen:
EVN__________
SBB
Fahrzeug 10101 [Re 4/4-IV]
www.sbb.ch/ressources/10101

Für die Lokomotive L22 wird dadurch automatisch die Identifikationsnummer 10101 und der Fahrzeugtyp Re 4/4-IV ermittelt.

Das erfindungsgemässe Verfahren und das erfindungsgemässe Kommunikationssystem weisen synergistische Effekte auf, die auf verschiedenen Betriebsebenen vorteilhaft in Erscheinung treten. Einerseits wird die Kommunikation von der höheren Betriebsebene zu den Mitarbeitern der unteren Betriebsebene optimiert, denen alle notwendigen statischen und dynamischen zentralen Ressourcendaten ohne Verzögerung zur Verfügung gestellt werden. Parallel dazu erfolgt ein Rückfluss von lokalen Ressourcendaten von der unteren Betriebsebene zur höheren Betriebsebene, der es erlaubt, alle Daten der eingesetzten Ressourcen mit minimalem Aufwand auf dem aktuellen Stand zu halten.

Da die fest installierten und vorzugsweise zur bidirektionalen Datenübertragung vorgesehenen Balisen KS1, KS2 zum Auslesen von Transpondern TAG 01 geeignet sind, können sie auch zum Auslesen der Datenträger 5L21 bzw. 5L22 verwendet werden. Die Balisen KS1, KS2 können somit alle Datenträger an den Komponenten eines Zuges T01, T02 auslesen und ebenfalls direkt oder indirekt an den Verwaltungsrechner VR übertragen. Dem erfindungsgemässen Kommunikationssystem stehenden nach einem erforderlichen Software-Update somit eine hohe Zahl von mobilen und stationären Lesegeräten KM, KS zur Verfügung, mittels denen eine hohe Datendichte und Abdeckung erreicht werden können.

Wie beschrieben, können die Datenträger 5, 5L21 bzw. 5L22 mit Kennzeichnungen (EVN) versehen werden, wie dies in Reglementen gefordert ist.

### Literaturverzeichnis

[1] EP2631152B1
[2] Leitfaden zur Anwendung des zentralisierten Europäischen Virtuellen Einstellungsregisters (ECVVR)/Referat Interoperabilität der Europäischen Eisenbahnagentur (European Railway Agency) (ERA/GUI/01-2010/INT Version: 4.00)
[3] EP1897781A2
[4] EP1672560B1
[5] Klaus Finkenzeller, RFID-Handbuch, 3. Auflage, Carl Hanser Verlag, München 2002
[6] EP2090491A1

## Patentansprüche

1. Verfahren für die Verwaltung von mobilen Ressourcen (1001, L01, ..., L99), insbesondere schienengebundenen Fahrzeugen, eines Eisenbahnsystems, die je mit wenigstens einem Datenträger (5) versehen sind, der lokale Ressourcendaten (d1001) aufweist, die mittels mobilen oder stationären Lesegeräten (KM, KS) drahtlos lesbar sind und die zumindest der zugehörigen mobilen Ressource (1001; L01; ...; L99) individuell zugeordnete Identifikationsdaten (1001) umfassen, die in einem Verwaltungsrechner (VR) registriert sind, **dadurch gekennzeichnet,**
a) **dass** die Identifikationsdaten (1001) der mittels eines der mobilen Lesegeräte (KM) ausgelesenen lokalen Ressourcendaten (d1001) als Element oder Argument einer Zieladresse (a1001) zum Verwaltungsrechner (VR) übermittelt werden;
b) **dass** der Verwaltungsrechner (VR) den übermittelten Identifikationsdaten (1001) zugeordnete zentrale Ressourcendaten (f1001) vorzugsweise automatisch an das mobile Lesegerät (KM) retourniert; und
c) **dass** die zentralen Ressourcendaten (f1001) im mobilen Lesegerät (KM) angezeigt und/oder verarbeitet werden.

2. Verfahren nach Anspruch 1, **dadurch gekennzeichnet, dass** der Datenträger (5) ein erstes Datenträgermodul (51) aufweist, aus dem die zugehörigen lokalen Ressourcendaten (d1001) von den mit Netzwerkmodulen und/oder RFID-Modulen ausgerüsteten mobilen oder stationären Lesegeräten (KM; KS) elektronisch auslesbar sind und/oder dass der Datenträger (5) ein zweites Datenträgermodul (52) aufweist, von dem die zugehörigen lokalen Ressourcendaten (d1001) vorzugsweise in Form eines zweidimensionalen Codes von den mit einer Kamera ausgerüsteten mobilen oder stationären Lesegeräten (KM; KS) optisch lesbar sind.

3. Verfahren nach Anspruch 2, **dadurch gekennzeichnet, dass** das erste Datenträgermodul (51) eine Steuereinheit (RC) aufweist, die Sensordaten von Sensoren (SM), die der zugehörigen mobilen Ressource (1001) zugeordnet sind, sammelt und mit den lokalen Ressourcendaten (d1001) zu den mobilen oder stationären Lesegeräten (KM; KS) überträgt.

4. Verfahren nach Anspruch 2 oder 3, **dadurch gekennzeichnet,**
a) **dass** das erste Datenträgermodul (51) wenigstens einen GPS-Sensor (GPS) aufweist, welcher Standortdaten des betreffenden Datenträgermoduls (5) liefert, die zusammen mit den Identifikationsdaten (d1001) zum ersten mobilen Lesegerät (KM) übertragen werden; oder
b) **dass** das mit einem GPS-Sensor ausgerüstete erste mobile Lesegerät (KM) Standortdaten bereitstellen; und
**dass** die vom Datenträgermodul (51) übertragenen oder im ersten mobilen Lesegerät (KM) ermittelten Standortdaten mit der Zieladresse (a1001) zum Verwaltungsrechner (VR) übermittelt werden.

5. Verfahren nach einem der Ansprüche 1 - 4, **dadurch gekennzeichnet, dass** die mobilen Lesegeräte (KM) Zusatzdaten, wie Zeitdaten und/oder physikalische Messdaten und/oder Daten des Anwenders und/oder Kenndaten des mobilen Lesegeräts (KM) bereitstellen und zusammen mit den gelesenen lokalen Ressourcendaten (d1001) zum Verwaltungsrechner (VR) übermitteln.

6. Verfahren nach einem der Ansprüche 1 - 5, **dadurch gekennzeichnet, dass** die Zieladresse (a1001) ein Link zu einer Seite eines Netzwerks, wie des Internets oder eines Intranets ist, über das der Datenaustausch mit dem Verwaltungsrechner (VR) erfolgt.

7. Verfahren nach einem der Ansprüche 1 - 6, **dadurch gekennzeichnet, dass** der der Verwaltungsrechner (VR) die zentralen Ressourcendaten (f1001) nach Auswertung der lokalen Ressourcendaten (d1001) aktualisiert und/oder dass der Verwaltungsrechner (VR) die zentralen Ressourcendaten (f1001) unter Berücksichtigung von Informationen, wie Wartungsdaten oder Planungsdaten, aktualisiert, die an anderer Stelle im Eisenbahnsystem bereitgestellt werden.

8. Verfahren nach einem der Ansprüche 1 - 7, **dadurch gekennzeichnet, dass** die mobilen Lesegeräte (KM) ein Anwendungsprogramm aufweisen, mittels dessen
a) der optische oder elektronische Lesevorgang oder die elektronische Kommunikation mit dem Datenträger (5) gesteuert wird;
b) die lokalen Ressourcendaten (d1001) zur Übermittlung an den Verwaltungsrechner (VR) sowie die Zieladresse (a1001) bereitstellt und an den Verwaltungsrechner (VR) übermittelt werden; und
c) die empfangenen zentralen Ressourcendaten (f1001) zur Anzeige auf dem betreffenden Lesegerät (KM) bereitgestellt werden.

9. Verfahren nach Anspruch 8, **dadurch gekennzeichnet, dass** die mobilen Lesegeräte (KM) zwischen einer ersten Betriebsart, in der die Übermittlung von lokalen Ressourcendaten (d1001) zum Verwaltungsrechner (VR) sowie der Empfang von zentralen Ressourcendaten (f1001) erfolgt, und einer zweiten Betriebsart umschaltbar sind, in der nur die Übermittlung von lokalen Ressourcendaten (d1001) zum Verwaltungsrechner (VR) erfolgt.

10. Verfahren nach einem der Ansprüche 1 - 9, **dadurch gekennzeichnet, dass** eine erste Gruppe von mobilen Lesegeräten (KM) vorgesehen ist, die für die Übermittlung von lokalen Ressourcendaten (d1001) zum Verwaltungsrechner (VR) sowie zum Empfang von zentralen Ressourcendaten (f1001) vorgesehen sind, und dass eine zweite Gruppe von mobilen Lesegeräten (KM) vorgesehen ist, die nur für die Übermittlung von lokalen Ressourcendaten (d1001) zum Verwaltungsrechner (VR) vorgesehen sind.

11. Verfahren nach einem der Ansprüche 1 - 10, **dadurch gekennzeichnet, dass** entlang dem Schienennetz des Eisenbahnsystems stationäre Lesegeräte (KS) vorgesehen sind, mittels denen lokale Ressourcendaten (d1001; dL01; dL21; dL22) aus den Datenträgern (5) zugehöriger mobiler Ressourcen (1001; L01; L21; L22) ausgelesen und mit Daten zum Verwaltungsrechner (VR) übermittelt werden, anhand derer der Standort der betreffenden mobilen Ressourcen (1001; L01; L21; L22) ermittelt und registriert wird.

12. Verfahren nach einem der Ansprüche 1 - 11, **dadurch gekennzeichnet, dass** in den mobilen oder stationären Lesegeräten (KM; KS) lokale Ressourcendaten (d1001) gesammelt, vorzugsweise gefiltert und/oder geordnet, und gruppiert und gegebenenfalls mit wenigstens einem Zeitstempel versehen an den Verwaltungsrechner (VR) übermittelt werden.

13. Kommunikationssystem für die Durchführung des Verfahrens nach einem der Ansprüche 1 - 12 zur Verwaltung von mobilen Ressourcen (1001, L01, ..., L99), insbesondere schienengebundenen Fahrzeugen, eines Eisenbahnsystems, die je mit einem Datenträger (5) versehen sind, der lokale Ressourcendaten (d1001) aufweist, die mittels mobilen oder stationären Lesegeräten (KM, KS) drahtlos lesbar sind und die zumindest der zugehörigen mobilen Ressource (1001; L01; ...; L99) individuell zugeordnete Identifikationsdaten (1001) umfassen, die in einem Verwaltungsrechner (VR) registriert sind, **dadurch gekennzeichnet,**
a) **dass** die Identifikationsdaten (1001) der mittels eines der mobilen Lesegeräte (KM) ausgelesenen lokalen Ressourcendaten (d1001) als Element oder Argument einer Zieladresse (a1001) zum Verwaltungsrechner (VR) übermittelbar sind;
b) **dass** durch den Verwaltungsrechner (VR) den übermittelten Identifikationsdaten (1001) zugeordnete zentrale Ressourcendaten (f1001) vorzugsweise automatisch an das mobile Lesegerät (KM) retournierbar sind; und
c) **dass** die zentralen Ressourcendaten (f1001) im mobilen Lesegerät (KM) darstellbar und/oder verarbeitbar sind.

14. Kommunikationssystem nach Anspruch 13, **dadurch gekennzeichnet, dass** der Datenträger (5) ein erstes Datenträgermodul (51) aufweist, aus dem die zugehörigen lokalen Ressourcendaten (d1001) von den mit Netzwerkmodulen und/oder RFID-Modulen ausgerüsteten mobilen oder stationären Lesegeräten (KM; KS) elektronisch auslesbar sind und/oder dass der Datenträger (5) ein zweites Datenträgermodul (52) aufweist, von dem die zugehörigen lokalen Ressourcendaten (d1001) vorzugsweise in Form eines zweidimensionalen Codes von den mit einer Kamera ausgerüsteten mobilen oder stationären Lesegeräten (KM; KS) optisch lesbar sind.

15. Kommunikationssystem nach Anspruch 13 oder 14, **dadurch gekennzeichnet, dass** das erste Datenträgermodul (51) eine Steuereinheit (RC) und damit verbundene Sensoren (SM), insbesondere einen GPS-Sensor (GPS) aufweist, deren Sensordaten und mit den lokalen Ressourcendaten (d1001) zu den mobilen oder stationären Lesegeräten (KM; KS) übertragbar sind.
